# EUROPÄISCHE PATENTSCHRIFT

(11) **EP 2 071 157 B1**
(45) Veröffentlichungstag und Bekanntmachung des Hinweises auf die Patenterteilung: **15.01.2014**
(21) Anmeldenummer: 08170422.3
(22) Anmeldetag: 02.12.2008
(51) Int. Cl.: F02C 9/54

(54) **Verfahren zur Regelung einer Gasturbine in einem Kraftwerk**
Method for controlling a gas turbine in a power plant
Procédé de contrôle d'une turbine à gaz dans une centrale électrique

(30) Priorität: 10.12.2007 CH 19172007
(43) Veröffentlichungstag der Anmeldung: 17.06.2009
(73) Patentinhaber: Alstom Technology Ltd, 5400 Baden (CH)
(72) Erfinder: Rofka, Stefan, 5415 Nussbaumen (CH); Rueter, Andreas, 5415 Nussbaumen (CH); Döbbeling, Klaus, 5210 Windisch (CH); Nicklas, Martin, 5430 Wettingen (CH)

(56) Entgegenhaltungen:
- EP-A- 1 724 528
- WO-A-2004/072453
- WO-A-2008/003571
- DE-A1- 2 109 215
- DE-A1- 10 260 992

## Beschreibung

### Technisches Gebiet

Die vorliegende Erfindung bezieht sich auf das Gebiet der Kraftwerkstechnik und betrifft ein Verfahren zur Regelung einer Gasturbine in einem Kraftwerk, bei welchem Verfahren zu jeder Last ein Satz der Gasturbineneintrittstemperatur TIT oder Gasturbinenaustrittstemperatur TAT und der Position eines oder mehrerer variablen Verdichter-Vorleitgitters VIGV vorgegeben wird.

### Stand der Technik

Die Leistung einer Gasturbine kann durch Veränderung der Turbineneintrittstemperatur, des Verdichter-Eintrittsmassenstromes oder beider Parameter eingestellt werden. Zur Einstellung des Verdichter-Eintrittsmassenstroms kann beispielsweise die Eintrittsgeometrie des Verdichters über ein verstellbares Vorleitgitter verändert werden.

Die Höhe der Turbineneintrittstemperatur bestimmt im wesentlichen den Lebensdauerverbrauch bzw. die Länge des Inspektionsintervalls der Gasturbine.

Der Wirkungsgrad der Gasturbine wird im wesentlichen durch das bei konstanter Turbineneintrittstemperatur proportional zur Kompressoreintrittsmenge verlaufende Druckverhältnis bestimmt.

Die Leistung einer Gasturbine wird im wesentlichen durch die Höhe der Turbineneintrittstemperatur bestimmt. Die Gasturbinenaustrittstemperatur ist direkt proportional zur Höhe der Turbineneintrittstemperatur und umgekehrt proportional zum Druckverhältnis der Gasturbine.

Der Wirkungsgrad eines kombinierten Gas-Dampfturbinen-Kraftwerks, eines sogenannten Kombikraftwerks, ist von der Höhe der Gasturbinenaustrittstemperatur und dem Gasturbinenwirkungsgrad abhängig. Daraus folgt, dass der Gesamtwirkungsgrad und die Leistung eines KombiKraftwerks im wesentlichen von der Gasturbineneintrittstemperatur abhängig ist.

Heutzutage werden Gasturbinen so geregelt, dass jeder Last ein fest vorgegebener Satz Gasturbineneintritts- oder Austrittstemperatur / Verdichtervorleitgitter-Position bzw. der Verlauf der Temperaturen für vorbestimmte Verdichtervorleitgitter-Positionen zugeordnet wird.

Eine Minimierung der Stromgestehungskosten im Sinne einer flexiblen Anpassung von Gasturbineneintrittstemperatur und/oder der Position des Verdichtervorleitgitters ist nur bei einer Neuinbetriebnahme möglich, bei welcher der entsprechende Satz oder Verlauf der Gasturbineneintrittstemperatur oder Gasturbinenaustrittstemperatur und der Position des Verdichtervorleitgitters zum Erreichen bestimmter maximaler oder minimaler Lastwerte oder als Funktion der Last festgelegt wird. Möchte man beispielsweise bei einer Erhöhung des Brennstoffpreises den Wirkungsgrad bei gleichzeitiger Verlängerung der Lebensdauer und damit des Wartungsintervalls bei gleichbleibender elektrischer Leistungsabgabe vermindern, wäre hierzu eine Neuinbetriebnahme der Gasturbine erforderlich.

Die WO 2008/003571 A1 (Stand der Technik nach Art, 54(3) EPÜ) offenbart ein Verfahren zum Betrieb einer Gasturbine, bei dem diverse Parameter, wie z.B. die Turbinenaustrittstemperatur oder die Position des Verdichter-Vorleitgitters, der Gasturbine gemessen bzw. bestimmt werden, um die effektive thermische Ausgangsleistung der Gasturbine zu berechnen. Die berechnete effektive thermische Ausgangsleistung wird zur Regelung der Gasturbine herangezogen.

Die WO 2004/072453 A1 offenbart eine Gasturbogruppe mit variabler Kühlung des verdichteten oder teilverdichteten Arbeitsmittels durch Einspritzung von Flüssigkeit. Als Führungsgrößen für die Kühlleistungsregelung werden beispielsweise die Turbineneintrittstemperatur oder die Stellung einer Verdichter-Leitreihe genannt.

Die EP 1 724 528 A1 offenbart ein Verfahren und eine Vorrichtung zum Regeln der Fahrlinie einer Gasturbinenbrennkammer zum Unterbinden von Flammeninstabilitäten. Die beschriebene Gasturbinenanlage weist verstellbare Verdichter-Leitschaufeln sowie einen Sensor zur Erfassung der Turbinenaustrittstemperatur auf.

### Darstellung der Erfindung

Der Erfindung liegt daher die Aufgabe zugrunde, ein Verfahren zur Regelung eines auf einer Gasturbine basierenden Kraftwerks zu schaffen, welches auch ohne Neuinbetriebnahme eine flexible Anpassung von Gasturbineneintrittstemperatur und/oder der Position des Verdichtervorleitgitters ermöglicht.

Die erfindungsgemässe Lösung der Aufgabe wird dadurch bewerkstelligt, dass eine Vielzahl von Fahrlinien für die Gasturbine für unterschiedliche Gasturbineneintrittstemperaturen TIT oder Gasturbinenaustrittstemperaturen TAT und Positionen des Verdichter-Vorleitgitters VIGV als Funktion der Last vorgegeben werden und zur Minimierung der Stromgestehungskosten während des Betriebs beliebig bei konstanter oder sich verändernder Leistungsabgabe des Kraftwerks zwischen den unterschiedlichen Fahrlinien umgeschaltet wird.

Das erfindungsgemässe Fahrkonzept gibt dem Kraftwerkbetreiber die Möglichkeit, die Stromgestehungskosten jederzeit gemäss den Anforderungen zu minimieren.

Die Stromgestehungskosten hängen im wesentlichen von folgenden, durch den Betrieb eines Kraftwerks entstehenden Kosten und Erlösen ab, nämlich den vom Kraftwerk zu zahlenden Brennstoffkosten pro erzeugte kWh Strom, deren Höhe durch den Wirkungsgrad der Gasturbine bestimmt wird, dem vom Kraftwerk durch den Verkauf der elektrischen Leistung erzielten Erlös und dem Lebensdauerverbrauch, d.h., den Kosten für Wartung und Instandhaltung der Gasturbine.

Das erfindungsgemässe flexible Gasturbinenfahrkonzept ermöglicht eine Optimierung der Fahrweise hinsichtlich Minimierung der Stromgestehungskosten. Hierbei kann während des Betriebs zwischen verschiedenen Turbineneintrittstemperaturen und Positionen des Verdichter-Vorleitgitters bei konstanter oder sich ändernder Leistungserzeugung umgeschaltet werden.

### Kurze Erläuterung der Figuren

Weitere Vorteile, Merkmale und Einzelheiten der Erfindung ergeben sich aus den aus der nachfolgenden Betrachtung hervorgehenden bevorzugten Ausführungsbeispielen sowie anhand der Zeichnung; diese zeigt schematisch in
- Fig.1 1: ein vereinfachtes Blockschaltbild für ein Kraftwerk mit einer Gasturbine, und
- Fig. 2: verschiedene Fahrlinien einer Gasturbine für unterschiedliche Gasturbineneintrittstemperaturen (TAT) bei unterschiedlichen Positionen des Verdichter-Vorleitgitters (VIGV) in Funktion der Last.

### Wege zur Ausführung der Erfindung

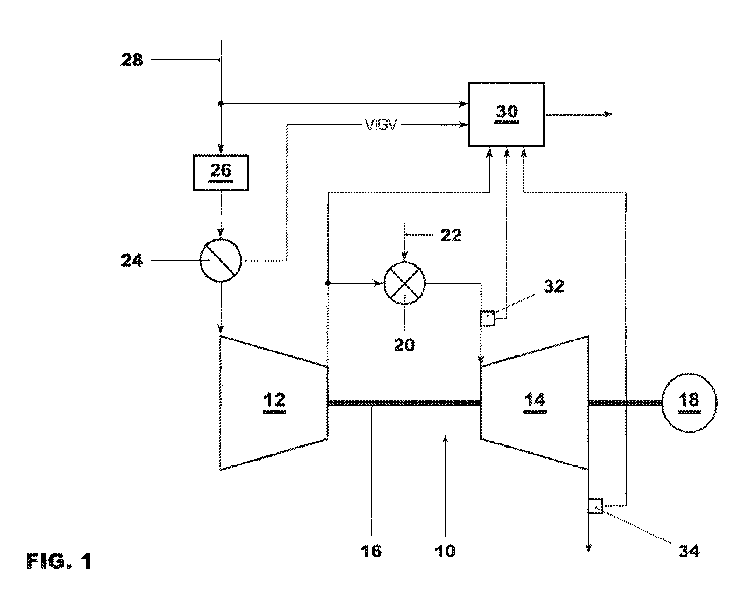

Bei einem in Fig. 1 wiedergegebenen Kraftwerk ist eine Gasturbine 10 ersichtlich, die einen Verdichter 12, eine Brennkammer 20 und eine Turbine 14 umfasst, und welche ein zentraler Bestandteil ist. Verdichter 12 und Turbine 14 sind auf einer gemeinsamen Welle 16 angeordnet, die einen Generator 18 antreibt. Der Verdichter 12 saugt über einen Lufteinlass 28, einen Filter 26 und eine verstellbare Leitschaufelanordnung 24 Luft aus der Umgebung an, verdichtet sie, und gibt die so verdichtete Luft über ein Plenum an die Brennkammer 20 weiter, wo sie zur Verbrennung eines über eine Brennstoffzufuhr 22 zugeführten Brennstoffs (flüssig oder gasförmig) verwendet wird. Das entstandene Heissgas wird in der Turbine 14 unter Arbeitsleistung entspannt und kann dann beispielsweise in einem nachfolgenden Abhitzedampferzeuger zur Erzeugung von Prozessdampf oder Dampf für eine Dampfturbine verwendet werden.

Für die Regelung der Gesamtanlage (Gasturbine und andere Komponenten) ist eine Regelung 30 vorgesehen, die in der Figur als einfacher Block mit einem Ausgang dargestellt ist, jedoch in der Realität sehr komplex und mit vielen Ausgängen für die verschiedenen Anlagenteile ausgestaltet sein kann.

In einem der Regelung 30 zugeordneten Datenspeicher ist eine Vielzahl von Fahrlinien jeweils in der Form eines bei Inbetriebnahme der Gasturbine 10 zu jeder Last oder zu oberen und unteren Grenzwerten der Last bestimmten, fest vorgegebenen Satzes oder Verlaufs der Gasturbineneintrittstemperatur TIT oder Gasturbinenaustrittstemperatur TAT und der Position bzw. des Anstellwinkels eines variablen Verdichter-Vorleitgitters VIGV abgelegt.

Zur Festlegung der Fahrlinien werden grundlegende Grössen der Gasturbine 10 herangezogen, und zwar insbesondere der Anstellwinkel VIGV der verstellbaren Leitschaufelanordnung 24 und die Turbineneintrittstemperatur TIT am Eingang der Turbine 14. Zur Eingabe des Anstellwinkels VIGV ist in der Figur eine Verbindungsleitung zwischen der verstellbaren Leitschaufelanordnung 24 und einem Eingang der Regelung 30 vorgesehen. Die Turbineneingangstemperatur TIT wird über einen entsprechenden, zwischen dem Ausgang der Brennkammer 20 und dem Eingang der Turbine 14 angeordneten Messwertaufnehmer 32 ermittelt und über eine Leitung auf einen anderen Eingang der Regelung 30 gegeben, wobei die Turbineneintrittstemperatur TIT = f(Druck vor Turbine oder Druck nach Verdichter, TAT, VIGV) ist. Die Turbinenaustrittstemperatur TAT wird herangezogen, um daraus rechnerisch die Turbineneintrittstemperatur TIT zu bestimmen. Dazu wird am Ausgang der Turbine 14 ein entsprechender Messwertaufnehmer 34 angeordnet und mit einem Eingang der Regelung 30 verbunden.

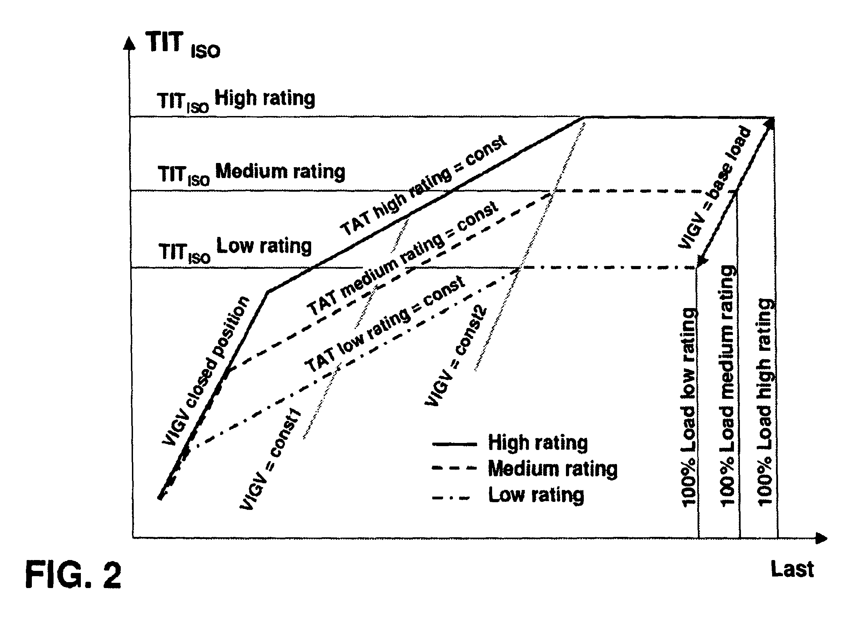

Bei dem in Fig. 2 dargestellten Fahrkonzept sind drei Betriebszustände bei unterschiedlich hoher Teillast erfasst. Bei einem Vorleitgitter-Anstellwinkel VIGV = "at base load position" und ein Betrieb bei hoher Teillast ist ein Vorleitgitter-Anstellwinkel VIGV = "closed position" vorgesehen. Es soll eine leistungsspezifische Lebensdauer sichergestellt werden. Hierzu werden leistungsspezifische Turbineneintrittstemperaturen TIT eingestellt, die bei Volllast zu drei verschiedenen Lebensdauern bzw. Inspektionsintervallen führen, welche Inspektionsintervalle nach einem "Standard (SP) oder Langen (LP) oder Extralangen (ELP)-Zeitintervall" definiert sind, wobei sich SP zu LP zu ELP beispielsweise wie 1 zu 1,5 zu 2 verhalten. Die drei Fahrlinien berücksichtigen drei verschiedene Turbineneintrittstemperaturen TIT im Grundlastbetrieb und im Betrieb bei hoher Teillast. Ein nahtloser Lastwechsel zwischen unterschiedlichen Leistungen wird ermöglicht.

Bei dem in Fig. 2 dargestellten Fahrkonzept sind, drei mögliche Fahrlinien dargestellt. Es ist für alle drei Fahrlinien die TIT als Funktion der Last dargestellt. Zur Berechnung der TIT sind verschiedene Möglichkeiten bekannt. Die gezeigte TIT ISO ist eine theoretische Temperatur die sich bei der Mischung der Heissgase mit allen Kühlluftströmen am Brennkammerende ergeben würde (nach ISO 2314:1989).

Bei tiefer Last sind alle Fahrlinien durch die Minimalposition der VIGV, die VIGV closed position, beschränkt. Die Fahrlinien liegen bei tiefer Last entsprechend übereinander und eine Anhebung der Leistung wird durch eine Anhebung der TIT erreicht bis eine der gewählten Fahrlinie entsprechende TAT erreicht wird. Je nach gewählter Fahrlinie (SP, LP, ELP) wird bis zu dem entsprechenden TAT Wert, dem TAT low rating, TAT medium rating oder TAT high rating aufgelastet. Sobald der jeweilige TAT Wert erreicht ist, wird bei einer weiteren Lasterhöhung die VIGV proportional zur Last geöffnet und die TAT konstant gehalten. Die jeweilige Last, die mit einer bestimmter VIGV Position, zum Beispiel mit VIGV = const1, erreicht werden kann, ist dabei proportional zur TIT der gewählten Fahrlinie (SP, LP, ELP).

Mit dem Öffnen der VIGV steigt der Massenstrom durch die Gasturbine, das Druckverhältnis über die Turbine 14 und damit das Temperaturverhältnis über die Turbine 14. Bei konstanter TAT, wird die TIT proportional zum Öffnen der VIGV erhöht. Dies erfolgt so lange, bis die zur jeweiligen Fahrlinie (SP, LP, ELP) gehörende maximale TIT, die TIT low rating, die TIT medium rating oder die TIT high rating, erreicht ist. Sobald die maximale TIT oder TIT base load erreicht ist, wird die Last nur noch über die VIGV geregelt und die TIT konstant gehalten. Da der Massenstrom mit Öffnen der VIGV weiter steigt, fällt die TAT (nicht dargestellt) bis zum erreichen von Base Load ab.

In dem gezeigten Beispiel sind die Verhältnisse von TIT- zu TAT- Werten für die verschieden Fahrlinien (SP, LP, ELP) so gewählt, dass der Übergang von konstanter TAT zur maximalen TIT jeweils bei der selben VIGV Position, VIGV = const2, erfolgt. Damit wird in dem Beispiel für alle Fahrlinien (SP, LP, ELP) ein ähnlicher Verlauf der Kühlluftdruckverhältnisse über der TIT bzw. TAT sichergestellt. Die Lebensdauerfaktoren werden so für alle Lastverhältnisse in erster Näherung gleich gehalten. Eine andere Wahl der Eckpunkte ist aber je nach Design und Optimierungsziel denkbar. Mit den verschieden Fahrlinien (SP, LP, ELP) wird die jeweils spezifische Lebensdauer sichergestellt. Hierzu werden paarweise leistungsspezifische Turbinenaustrittstemperaturen TAT und TIT als Funktion der Last geregelt. Die VIGV kann als Regelparameter genutzt werden oder als Funktion der Last vorgegeben werden. Die drei spezifischen Lebensdauern im Grundlast- und Teillastbetrieb führen zu drei verschiedenen Inspektionsintervallen, die z.B. Inspektionsintervallen von bestimmten Perioden in Abhängigkeit zu den festgelegten Betriebsstunden entsprechen.

Ein nahtloser Lastwechsel zwischen unterschiedlichen Fahrlinien wird durch eine entsprechende Anhebung bzw. Absenkung der TIT/ TAT möglich. Dazu werden die TIT/ TAT beispielsweise mit konstanten Gradienten angehoben oder abgesenkt. Der Gradient mit der die TIT oder TAT angepasst wird, ist beispielsweise in der Grössenordnung eines TIT oder TAT Gradienten gewählt, der zu einem Lastwechsel entlang einer Fahrlinie mit normalem Lastgradienten benötigt wird. Die Inspektionsintervalle ergeben sich bei Wechsel zwischen den Fahrlinien entsprechend der Zeitanteile, die auf den jeweiligen Fahrlinien gefahren wurde.

### Bezugszeichenliste

- 10: Gasturbine
- 12: Verdichter
- 14: Turbine
- 16: Welle
- 18: Generator
- 20: Brennkammer
- 22: Brennstoffzufuhr
- 24: verstellbare Leitschaufelanordnung
- 26: Filter
- 28: Lufteinlass
- 30: Regelung
- 32: Messwertaufnehmer (Turbineneintrittstemperatur TIT)
- 34: Messwertaufnehmer (Turbinenaustrittstemperatur TAT)
- SP: Standard Periode, Inspektionsintervall Betriebsdauer 1 bei TIT high rating
- LP: Lange Periode, Inspektionsintervall Betriebsdauer 1,5 bei TIT medium rating
- ELP: Extralange Periode, Inspektionsintervall Betriebsdauer 2 bei TIT low rating
- TIT high rating: Standard Turbineneintrittstemperatur" zu Inspektionsintervall SP
- TIT medium rating: Leicht abgesenkte Turbineneintrittstemperatur zu Inspektionsintervall LP
- TIT low rating: Abgesenkte Turbineneintrittstemperatur zu Inspektionsintervall ELP
- TIT: Turbineneintrittstemperatur
- TAT: Turbinenaustrittstemperatur
- VIGV: Anstellwinkel der verstellbaren Leitschaufelanordnung
- VIGV closed position: Kleinste Öffnung der VIGV für Leerlaufbetrieb und tiefe Teillast
- VIGV const1: Beispiel bei welcher Last und TIT für verschiedene Fahrlinien ein VIGV Öffnungswinkel erreicht wird.
- VIGV const2: VIGV Winkel bei dem die TIT Base Load für verschiedene Fahrlinien erreicht wird
- L: Last

## Patentansprüche

1. Verfahren zur Regelung einer Gasturbine (10) in einem Kraftwerk, bei welchem Verfahren zu jeder Last ein Satz der Gasturbineneintrittstemperatur (TIT) oder Gasturbinenaustrittstemperatur (TAT) und der Position eines oder mehrerer variablen Verdichter-Vorleitgitter (VIGV) vorgegeben wird,
**dadurch gekennzeichnet, dass** eine Vielzahl von Fahrlinien für die Gasturbine (10) für unterschiedliche Gasturbineneintrittstemperaturen (TIT) oder Gasturbinenaustrittstemperaturen (TAT) und Positionen des Verdichter-Vorleitgitters (VIGV) als Funktion der Last vorgegeben wird und zur Minimierung der Stromgestehungskosten während des Betriebs beliebig bei konstanter oder sich verändernder Leistungsabgabe des Kraftwerks zwischen den unterschiedlichen Fahrlinien umgeschaltet wird.

## Claims

1. Method for controlling a gas turbine (10) in a power plant, with which method a rating of the gas turbine inlet temperature (TIT) or gas turbine exhaust temperature (TAT) and the position of one or more variable compressor inlet guide vane cascades (VIGV) is specified for each load, **characterized in that** a multiplicity of operating lines for the gas turbine (10) for different gas turbine inlet temperatures (TIT) or gas turbine exhaust temperatures (TAT) and positions of the compressor inlet guide vane cascade (VIGV) are specified as a function of the load, and for minimizing the electricity production costs during operation switching is optionally carried out between the different operating lines during constant or varying power output of the power plant.

## Revendications

1. Procédé de régulation d'une turbine à gaz (10) dans une centrale électrique, dans lequel procédé on prédéfinit pour chaque charge un jeu de la température d'entrée dans la turbine à gaz (TIT) ou de la température de sortie dans la turbine à gaz (TAT) et de la position d'une ou plusieurs grilles directrices variables de compresseur (VIGV), **caractérisé en ce qu'**une pluralité de lignes directrices pour la turbine à gaz (10) est prédéfinie pour différentes températures d'entrée dans la turbine à gaz (TIT) ou différentes températures de sortie dans la turbine à gaz (TAT) et de positions de la grille directrice du compresseur (VIGV) en fonction de la charge, et on commute entre les différentes lignes directrices en vue de minimiser les prix de revient du courant pendant le fonctionnement de manière sélective pour une puissance fournie constante ou variable de la centrale électrique.
